(19) **Europäisches Patentamt European Patent Office Office européen des brevets**

(11) **EP 3 151 677 B1**

(12) **FASCICULE DE BREVET EUROPEEN**

(45) Date de publication et mention de la délivrance du brevet:
**17.10.2018 Bulletin 2018/42**

(21) Numéro de dépôt: **15729242.6**

(22) Date de dépôt: **05.06.2015**

(51) Int Cl.:
*A23G 4/08* (2006.01)  *A23P 10/20* (2016.01)
*A23G 4/10* (2006.01)  *A23L 29/30* (2016.01)
*A23L 27/30* (2016.01)

(86) Numéro de dépôt international:
**PCT/IB2015/054259**

(87) Numéro de publication internationale:
**WO 2015/186099 (10.12.2015 Gazette 2015/49)**

(54) **COMPOSITION PULVÉRULENTE DE SORBITOL ET GOMME À MÂCHER COMPRENANT CETTE COMPOSITION**

SORBITOLPULVERZUSAMMENSETZUNG UND KAUGUMMI MIT BESAGTER ZUSAMMENSETZUNG

SORBITOL POWDER COMPOSITION AND CHEWING-GUM COMPRISING THIS COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2014 BE 201400431**

(43) Date de publication de la demande:
**12.04.2017 Bulletin 2017/15**

(73) Titulaire: **Tereos Starch & Sweeteners Belgium 9300 Aalst (BE)**

(72) Inventeurs:
• **BENSOUISSI, Abdelfattah**
  **B-9300 Aalst (BE)**
• **CAMUEL, Nadia**
  **B-9300 Aalst (BE)**

(74) Mandataire: **Chielens, Kristof et al**
  **KOB nv**
  **Patents**
  **President Kennedypark 31c**
  **8500 Kortrijk (BE)**

(56) Documents cités:
EP-A1- 1 413 567    WO-A1-88/06845
GB-A- 1 481 846     US-A- 3 973 041
US-A1- 2013 225 874  US-B1- 6 274 778

EP 3 151 677 B1

**Description**

La présente invention concerne une composition pulvérulente de sorbitol de faible friabilité ou à forte résistance mécanique particulièrement adaptée pour être manipulée dans des conditions de forts cisaillements ou de chocs ainsi que le procédé d'obtention d'une telle composition pulvérulente. L'invention concerne également un chewing-gum comprenant une telle composition pulvérulente ainsi que la méthode d'obtention d'un tel chewing-gum.

Le sorbitol est largement utilisé dans l'industrie alimentaire. Il a été constaté lors de la manutention du sorbitol, que les propriétés de la poudre pouvaient être modifiées. En effet, l'exercice de contraintes ou de chocs sur les particules peuvent entrainer leur effritement ou leur déstructuration et ainsi induire une importante création de fines particules. Cet apport indésirable de fines particules modifie à la fois les caractéristiques intrinsèques de la poudre (granulométrie plus fine, densité plus élevée, surface plus élevée...etc), le comportement de la poudre lors de sa manutention (mauvais écoulement, obstruction des conduites lors du transport pneumatique, tassement dans les silos et trémies...) et son stockage (reprise en eau plus rapide, prise en masse...etc).

Une telle dégradation des poudres peut s'observer notamment lors de leur convoyage par transport pneumatique qui peut atteindre une vitesse de 40m/s ou lors de leur introduction dans des silos ou des trémies... Or, ces étapes sont essentielles et peuvent être répétées plusieurs fois le long d'une ligne de fabrication. Une telle évolution de la poudre n'est pas souhaitée puisque d'une part, elle accroît le risque de colmatage ou d'obstruction des conduites, d'explosion mais également parce que la poudre qui est finalement utilisée ne correspond plus à celle souhaitée et réduit ainsi la productivité des lignes de production.

Plus particulièrement, certains procédés tels que ceux portant sur l'obtention de chewing-gums nécessitent l'utilisation d'une composition pulvérulente avec une répartition granulométrique très spécifique. Ainsi, l'utilisation d'une composition pulvérulente résistant à de forts cisaillements garanti que la composition finalement incorporée dans le procédé d'obtention du chewing-gum correspond effectivement à celle souhaitée.

Les caractéristiques d'une poudre de sorbitol sont liées aussi bien à la composition du sirop qui a servi pour son élaboration (pureté et type d'impuretés) qu'à la méthode de cristallisation mise en oeuvre pour l'obtenir. Il existe différentes techniques de cristallisation bien connues de l'homme du métier (Land.V., (2005). Industrial crystallization of melts, c. M., Van't Land Processing Enschede the Netherlands). La composition du sirop de sorbitol ainsi que la méthode de cristallisation utilisée vont conférer à la composition pulvérulente ses caractéristiques physicochimiques et notamment une certaine stabilité mécanique, une surface spécifique, une densité. Parmi les méthodes de cristallisation les plus avantageuses dans le cadre de l'invention, peut citer par exemple l'extrusion, la pan agglomération, la granulation ou l'atomisation notamment décrit par l'art antérieur (EP 1 008 602, GB 1 481 846 (ROQUETTE FRERES), EP 1 413 567 (DHW DEUTSCHE HYDRIERWERKE GMBH).

US 2013/0225874 décrit un procédé de fabrication d'un sirop de sorbitol d'une teneur en sucres totaux réducteurs inférieure ou égale à 0,2% et d'une teneur en mannitol inférieure à 1% à une matière sèche de 70% en poids.

Des gommes à mâcher comprenant du sorbitol pulvérulent sont décrites dans US 3,973,041 et WO 88/06845.

Afin d'obtenir une composition pulvérulente riche en sorbitol, ayant une stabilité améliorée, susceptible d'être utilisée dans des procédés à très fort cisaillement ou en transport pneumatique, la présente invention concerne une composition pulvérulente présentant au moins 96% de sorbitol/DS, un rapport A du sorbitol / (mannitol + arabitol) (w/w) compris entre 105 à 150 et/ou un Indice de Stabilité Mécanique D(v,0.1) inférieure à 60%, une densité en vrac de 630 à 700g/l et préférentiellement, une surface spécifique comprise entre 0,6 et 1,8m²/g.

La « *teneur en sorbitol* » de la composition est mesurée en poids sur sec. Préférentiellement, la composition pulvérulente comprend une teneur en sorbitol supérieure à 96% (w/w) en poids sec, préférentiellement supérieur à 96,5% ; 97% ; 97,5%, 97,8%; 98%; 98,2% ou à 98,5%. Plus préférentiellement, la teneur en sorbitol est comprise entre 96 et 99,3% ; plus préférentiellement entre 96,5 et 99,2% ou 97,4% et 99% ou 97,6 et 98,8%. Typiquement la teneur en sorbitol est comprise entre 98% et 98,5%. Par exemple, la teneur en sorbitol peut être de 98,2% environ. Les inventeurs ont mis en évidence qu'en deça de 96%/DS de pureté le sirop de sorbitol devient difficilement cristallisable et ne permet pas d'obtenir la composition pulvérulente selon l'invention.

Par « *rapport A* » ou « *rapport sorbitol/ (mannitol + arabitol)* » selon l'invention, on entend le ratio entre la concentration (w/w) (ou teneur) en sorbitol de la composition pulvérulente sur la somme des concentrations en arabitol et en mannitol. Préférentiellement, la composition pulvérulente selon l'invention comprend un rapport A du sorbitol / (mannitol + arabitol) compris entre 105 à 150, préférentiellement de 110 à 149, plus préférentiellement de 115 à 148, encore plus préférentiellement de 116 à 147, 117 à 146, 118 à 145, 120 à 144, 121 à 143, 122 à 142, 122,2 à 141 ou de 121 à 130. Un tel rapport permet de moduler la cristallisation de telle sorte que la forme et l'organisation des particules de la composition pulvérulente par exemple des agglomérats de cristaux confèrent une meilleure résistance aux chocs mécaniques ainsi qu'aux forces de cisaillement.

La mesure de la concentration de ces composés est effectuée par HPLC, technique bien connue de l'homme du métier, plus particulièrement selon la méthode ISO 10504 :2013. Ce rapport est indicateur de la proportion du mélange de mannitol et d'arabitol dans le sirop de sorbitol. Les inventeurs ont constaté que ce ratio confère des caractéristiques de stabilité à la poudre sans influer négativement la cristallisation du sorbitol. En effet, une quantité trop élevée de mannitol et/ou d'arabitol dans le sirop de sorbitol est susceptible de réduire fortement la cristallisation du sorbitol et donc de réduire la qualité de la poudre obtenue. Inversement, une quantité réduite de mannitol et/ou d'arabitol conduit à l'obtention d'une poudre d'une plus faible résistance aux chocs mécaniques.

Par « *Surface spécifique* » selon la présente invention, on entend, la mesure décrite dans la Pharmacopée Européenne 6.0 N°01/2008 :20926 p.306 et dans l'article « BET Surface Area by Nitrogen Absorption » de S. BRUNAUER et al. (Journal of Americain Chemical Society, 60, 309, 1938). La surface spécifique B.E.T. peut être déterminée par un analyseur de surface spécifique de type Micrometrics basé sur un test d'absorption de l'azote sur la surface du produit soumis à l'analyse. Lors de la mesure de la SSA, les échantillons subissent une étape préalable de dégazage sous vide à 42°C pendant 32 heures. Préférentiellement, la composition pulvérulente selon l'invention comprend une surface spécifique comprise entre 0,6 et 1,8m$^2$/g, préférentiellement entre 0,65 et 1,5 ; 0,68 et 1,4 ; 0,7 et 1,35 ; 0,75 et 1,3 ; 0,8 et 1,25 ; et plus préférentiellement entre 0,82 et 1,2m$^2$/g.

La surface spécifique d'une composition pulvérulente reflète à la fois la surface externe des particules et la surface des pores au sein même des particules. Ainsi, pour une masse donnée de poudre plus les particules sont fines et poreuses, plus la surface spécifique est élevée. Inversement, plus les particules sont denses et plus la surface spécifique est faible. Ainsi, la faible surface spécifique de la composition pulvérulente selon l'invention permet également d'augmenter la résistance des particules de la composition aux chocs.

Par « *densité en vrac* », on entend la densité telle que mesurée selon la méthode décrite dans la Pharmacopée Européenne 6.0 N° 01/2008 :20915 p.285. Plus particulièrement, la mesure de la densité en vrac s'effectue à l'aide d'une machine de type ERWEKA (ERWEKA GmbH). La densité en vrac peut être mesurée par exemple en introduisant dans une éprouvette graduée en verre (Volume = 250 mL) une certaine masse de composition pulvérulente jusqu'a d'obtenir un volume de poudre égal à 250 mL. La composition pulvérulente est introduite de telle sorte qu'aucun compactage n'est obtenu lors de remplissage. Pour cela le remplissage est fait de façon progressive en utilisant une spatule et un entonnoir maintenu à 6 cm de la limite supérieur de l'éprouvette. La densité en vrac est alors déduite à partir de la différence de masse de l'éprouvette avant et après remplissage selon la formule suivante : Densité en Vrac (g/L) = ((masse de l'éprouvette + échantillon) - (masse de l'éprouvette vide))*4.

La composition pulvérulente selon l'invention, présente une densité en vrac de 630 à 700 (g/L), préférentiellement, de 640 à 690 ; 650 à 680 ou de 655 à 675g/l.

La densité en vrac de manière générale dépend essentiellement de la morphologie des cristaux, de l'état d'arrangement des cristaux au sein des particules (porosité) mais également de l'état d'arrangement spatial des particules (cohésion), les particules étant formées d'agglomérats de cristaux. Toutes ces caractéristiques dépendent des paramètres de mise en oeuvre de la cristallisation du sorbitol et plus précisément de la qualité du sirop utilisé pour élaborer la composition pulvérulente (pureté et type d'impuretés).

Par « *densité tassée* », on entend la mesure de la densité après tassement d'une poudre telle que décrit dans la Pharmacopée Européenne 6.0 N° 01/2008:20915 p.285. Typiquement, la mesure de la densité tassée peut être effectuée de la même façon que la densité en vrac mais la lecture du volume s'effectue dans l'éprouvette après 500 tapes consécutives appliquées sur la poudre. La densité tassée peut être calculée selon la formule suivante : Densité tassée (g/L) = ((masse de l'éprouvette (g)+ échantillon (g)) - (masse de l'éprouvette vide(g)))*1000/ Volume occupé par la poudre après tassement exprimé en millilitres. La composition selon l'invention présente une densité tassée de 650 à 730 (g/L), 660 à 725 ; 670 à 720 ; 675 à 710 ou de 680 à 705g/l.

La densité tassée de manière générale, reflète le changement de l'arrangement spatial des particules de la composition pulvérulente lorsque celle-ci est sujette à une contrainte de tape. Ainsi, elle reflète la résistance des cristaux à la force exercée par leur propre poids conjuguée avec la pression exercée. Cette résistance dépend de la cohésion et la morphologie des cristaux.

La densité tassée, ainsi que la densité en vrac dépendent de la cristallisation du sorbitol et plus précisément de qualité du sirop utilisé pour élaborer la composition pulvérulente (pureté et type d'impuretés).

La composition pulvérulente selon l'invention présente une granulométrie moyenne (décrite par le D(v,0.5)) de 100 à 400 microns, préférentiellement entre 150 et 380 microns, plus préférentiellement entre 120 et 360 microns, typiquement, la granulométrie moyenne de la composition pulvérulente est entre 150 et 350 microns ou entre 180 et 220 microns.

Typiquement, la composition pulvérulente selon l'invention est composée d'agglomérats de cristaux préférentiellement obtenus par cristallisation et granulation notamment par extrusion, pan agglomération, granulation continue ou atomisation.

La mesure de la granulométrie moyenne est préférentiellement effectuée par tamisage selon des méthodes telles que l'ALIPINE et/ou le RETSCH.

Avantageusement, la composition pulvérulente selon l'invention présente une distribution de taille des particules comme suit:

- de 0 à 2,3% en poids, de particules > 400 microns, préférentiellement, de particules comprises entre 400 et 600 microns,
- de 34,8 à 54,9% en poids, de particules comprises entre 250 et 400 microns,
- de 42,7 à 57,9% en poids, de particules comprises entre 100 et 250 microns,
- de 1,4 à 8,0% en poids, de particules comprises entre 75 et 100 microns et,
- de 0,5 à 4,8% en poids, de particules < 75 microns, dont la somme des différentes fractions étant de 100% en poids.

Ces caractéristiques de répartition granulométrique combinées avec celle de résistance de la poudre au cisaillement rendent ces poudres tout particulièrement adaptées à une application dans la fabrication du chewing-gum.

Préférentiellement, la composition pulvérulente selon l'invention présente une distribution de taille des particules comme suit

- de 0 à 1% en poids, de particules > 400 microns, préférentiellement, de particules comprises entre 400 et 600 microns
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0,5 à 2,5% en poids, de particules < 75 microns, dont la somme des différentes fractions étant de 100% en poids.

L'analyse de la répartition granulométrique peut être effectuée par différentes techniques telle que l'ALIPINE et/ou le RETSCH.

La mesure de la distribution de taille des particules s'effectue préférentiellement, par la méthode RETSCH suivant la méthode décrite dans la Pharmacopée Européenne 6.0 N° 01/2008 :20938 p.325.

Plus particulièrement, la répartition granulométrique de la poudre selon l'invention peut être mesurée à l'aide d'une tamiseuse RETSCH, modèle AS200 control 'g' selon les recommandations du constructeur. L'utilisation de cet équipement Retsch pour pratiquer ces analyses est bien documentée par le constructeur et dans la littérature.

Typiquement, les poudres de sorbitol peuvent être caractérisées de la façon suivante : 100g de chacune des poudres est additionnée de 1g d'agent d'écoulement libre « Free flowing agent » tel que de la silice (SIPERNAT® 22 S). La masse homogénéisée est tamisée par ledit-équipement avec une amplitude d'oscillation de 1,5 mm pendant 10 minutes. Les différents tamis utilisés (de 400, 250, 100 et 75 microns) selon cette méthode sont certifiés (ISO 3310-1). Chaque tamis est ensuite pesé afin de mesurer le poids de chacune des fractions granulométriques et calculer une répartition granulométrique en pourcentages. Pour la pesée des différents tamis avant et après tamisage une balance de précision (0,1 g) est utilisée.

La répartition granulométrique influence directement l'écoulement de la composition pulvérulente. En général un taux élevé de fines est défavorable à l'écoulement de la composition pulvérulente du fait que les fines s'intercalent entre les grosses particules et constituent des ponts qui s'opposent au glissement des grosses particules.

La composition pulvérulente selon l'invention présente une très bonne stabilité mécanique. Selon la présente invention, la stabilité mécanique est évaluée par un indice appelé « Indice de Stabilité Mécanique (ISM) ». Cet indice exprimé en % représente la variation de D(v,0.1) lorsque la composition pulvérulente de sorbitol est soumise à un test d'impact.

Par D(v,0.1) on entend, le diamètre maximum des fines particules occupant 10 % du volume total de la poudre.

Par « ISM » ou « $ISM_{D(v,0.1)}$ » on entend la fraction calculée comme suit :

$$ISM = \frac{(D(v,0.1)a - D(v,0.1)b) \times 100}{D(v,0.1)a}$$

dans laquelle D(v,0.1)b correspond à la D(v,0.1) de la dite composition pulvérulente mesurée après un test d'impact comprenant trois cycles de projection de ladite composition pulvérulente à 20 m/sec sur une surface lisse non déformable, et D(v,0.1)a correspondant à la D(v,0.1) de la dite composition pulvérulente mesurée avant le test d'impact.

L'ISM reflète le taux de casse de particules suite au test d'impact. Ainsi, plus l'ISM est élevé et plus la poudre est mécaniquement fragile.

Les fractions correspondant aux taux de casse de particules de la fraction des particules correspondant à la D(v,0.5) et la D(v,0.9) peuvent également être mesurés mais sont moins représentatifs des caractéristiques de la poudre que celle calculée en fonction de la D(v,0.1).

Le choix de la D(v,0.1) pour calculer l'ISM est particulièrement pertinent dans la mesure où il reflète la fraction fine de la composition pulvérulente. Cette fraction de la composition pulvérulente représente la fraction la plus largement touchée lors de la rupture des particules lors du test d'impact. Ainsi, lors de la rupture des particules, la proportion de particules les plus fines va varier (et notamment augmenter) de façon plus importante que les autres fractions de la composition pulvérulente (qui elles vont diminuer), les particules les plus grosses se disloquant en deux ou plusieurs particules fines. De plus, l'augmentation de la représentativité de la fraction fine de la composition pulvérulente induit des modifications des caractéristiques de la poudre (densité, surface spécifique, écoulement) mais également de nombreux problèmes telle que la prise en masse de la composition lors du stockage, la reprise en eau rapide, l'augmentation du risque d'explosion, les pertes de matières non négligeables dans l'atelier, le risque d'inhalation pour les opérateurs...etc. Typiquement, la composition pulvérulente selon l'invention présente un ISM D(v,0.1) inférieur à 60%, préférentiellement, inférieur à 58%, 56%, 55%, 53% 52%, 50%. Préférentiellement, la composition pulvérulente selon l'invention présente un ISM compris entre à 60 et 20%, préférentiellement entre 55 et 25 ; 53 et 30% ; 52 et 35% ; 50 et 40%.

A titre indicatif, le calcul de la stabilité d'une poudre évaluée à partir de la D(v,0.5) (ISM$_{D(v,0.5)}$) ou de la D(v,0.9) (ISM$_{D(v,0.9)}$) peut être effectué à partir des distributions granulométriques cumulées suivant la même approche que celle utilisée pour évaluer le ISM$_{D(v,0.1)}$.

$$ISM_{D(v,0.5)} = \frac{(D(v,0.5)a - D(v,0.5)b) \times 100}{D(v,0.5)a}$$

Avec

D(v,0.5)a correspond à la D(v,0.5) avant le test d'impact et
D(v,0.5)b correspond à la D(v,0.5) après le test d'impact

$$ISM_{D(v,0.9)} = \frac{(D(v,0.9)a - D(v,0.9)b) \times 100}{D(v,0.9)a}$$

Avec

D(v,0.9)a correspond à la D(v,0.9) avant le test d'impact et
D(v,0.9)b correspond à la D(v,0.9) après le test d'impact

Ainsi, un tel calcul pour la composition selon l'invention permet d'obtenir des valeurs d'un ISM$_{D(v,0.5)}$ inférieures à 20%, préférentiellement inférieure à 18% ; 17,5% ; 16% ou à 16,5%. Préférentiellement, la composition pulvérulente selon l'invention présente un ISM$_{D(v,0.5)}$ compris entre à 20 et 5%, préférentiellement entre 18 et 7% ; 17,5 et 8% ; 16 et 9% ; ou entre 16,5 et 10%. La composition pulvérulente selon l'invention présente un ISM$_{D(v,0.9)}$ inférieur à 13%, préférentiellement inférieure à 12,5% ; 12% ; 11,9 ou à 11,8%. Préférentiellement, la composition pulvérulente selon l'invention présente un ISM$_{D(v,0.9)}$ compris entre à 13 et 5%, préférentiellement entre 12,5 et 5% ; 12 et 6% ; 11,9 et 6,5% ; ou entre 11,8 et 7%.

Avantageusement, la composition selon l'invention présente un ISM$_{D(v,0.1)}$ inférieur à 60%, et un ISM$_{D(v,0.9)}$ inférieur à 13% ou un ISM$_{D(v,0.1)}$ inférieur à 60%, et un ISM$_{D(v,0.9)}$ inférieur à 12.5%, ou un ISM$_{D(v,0.1)}$ inférieur à 56%, et un ISM$_{D(v,0.9)}$ inférieur à 13%, ou un ISM$_{D(v,0.1)}$ inférieur à 55%, et un ISM$_{D(v,0.9)}$ inférieur à 12%, ou un ISM$_{D(v,0.1)}$ inférieur à 60%, un ISM$_{D(v,0.5)}$ inférieures à 20% et un ISM$_{D(v,0.9)}$ inférieur à 13%, ou un ISM$_{D(v,0.1)}$ inférieur à 58%, un ISM$_{D(v,0.5)}$ inférieures à 18% et un ISM$_{D(v,0.9)}$ inférieur à 13%, ou un ISM$_{D(v,0.1)}$ inférieur à 55%, un ISM$_{D(v,0.5)}$ inférieures à 18% et un ISM$_{D(v,0.9)}$ inférieur à 13%, ou un ISM$_{D(v,0.1)}$ inférieur à 55%, un ISM$_{D(v,0.5)}$ inférieures à 17% et un ISM$_{D(v,0.9)}$ inférieur à 13%.

Avantageusement, la composition selon l'invention présente un ISM$_{D(v,0.1)}$ compris entre à 60 et 20%, et un ISM$_{D(v,0.9)}$ compris entre à 13 et 5% ou un ISM$_{D(v,0.1)}$ compris entre à 60 et 20%, et un ISM$_{D(v,0.9)}$ compris entre 12,5 et 5%, ou un ISM$_{D(v,0.1)}$ inférieur à 56%, et un ISM$_{D(v,0.9)}$ compris entre à 13 et 5%, ou un ISM$_{D(v,0.1)}$ inférieur à 55%, et un ISM$_{D(v,0.9)}$ compris entre 12 et 6%,, ou un ISM$_{D(v,0.1)}$ compris entre à 60 et 20%, un ISM$_{D(v,0.5)}$ compris entre à 20 et 5% et un ISM$_{D(v,0.9)}$ compris entre à 13 et 5%, ou un ISM$_{D(v,0.1)}$ compris entre à 58 et 20%, un ISM$_{D(v,0.5)}$ compris entre 18 et 7% et un ISM$_{D(v,0.9)}$ compris entre à 13 et 5% ou un ISM$_{D(v,0.1)}$ compris entre à 55 et 20%, un ISM$_{D(v,0.5)}$ compris entre 18 et 7% et un ISM$_{D(v,0.9)}$ compris entre à 13 et 5%, ou un ISM$_{D(v,0.1)}$ compris entre à 55 et 20%, un ISM$_{D(v,0.5)}$ compris entre 17,5 et 7%et un ISM$_{D(v,0.9)}$ compris entre à 13 et 5%.

Néanmoins, les valeurs de l'ISM $_{D(v,0.1)}$ sont préférées en ce qu'elles sont plus représentative de la stabilité d'une composition pulvérulente.

L'art antérieur décrit différentes méthodes permettant de mesurer la friabilité d'une poudre qui ne sont pas pertinentes pour caractériser la stabilité de la poudre lors de sa manutention. A titre d'exemple le brevet EP 0 645 096 décrit une méthode de mesure de la friabilité de compositions pulvérulentes de sorbitol consistant à mettre une masse donnée de poudre en présence de billes métalliques dans un tambour mis en rotation. La composition pulvérulente obtenue est ensuite tamisée sur un tamis de 100 μm et la proportion pondérale représentée par le résidu retenu est déterminée. Or, les billes métalliques vont exercer des forces de compression sur les particules de la composition qui ne sont pas généralement observées en manutention ou lors de transfert des poudres mais sont retrouvées dans les broyeurs à billes. De telles méthodes sont décrites dans l'art antérieur comme moins sévères pour les poudres de fines granulométries (US 5,573,777), elles ne semblent donc pas adaptées à l'analyse de poudre de large spectre granulométrique.

Le test d'impact est particulièrement pertinent dans l'évaluation de la stabilité mécanique d'une poudre en ce qu'il est très représentatif des forces exercées sur les particules de la composition pulvérulente lors de sa manutention en général et plus particulièrement lors du transport pneumatique industriel qui est très largement utilisé ou du chargement des compositions pulvérulentes dans des silos ou autres. Typiquement, selon la présente invention, par test d'impact, on entend un test de trois cycles de projection de la composition pulvérulente selon l'invention à 20 m/sec sur une surface lisse non déformable.

Le test d'impact est effectué par la projection de la composition pulvérulente à l'aide d'un jet d'air sur une cible, préférablement trois cycles d'impact sont effectués. La vitesse de l'impact, l'inclinaison de la cible et le débit d'alimentation en poudre sont modulables selon le souhait du manipulateur. Préférentiellement, la vitesse de projection de la composition pulvérulente est de 20m/sec.

Un tel test d'impact est connu de l'homme du métier, le schéma de principe de cette machine est notamment décrit dans l'article « Mise en OEuvre des Poudres Granulation Humide : bases et théorie » de S. KHASHAYAR et P. GUIGON (Techniques de l'Ingénieur Opérations Unitaires : Tri et Traitement des Liquides et des Solides, ref. article : j2253, 2014), URL = http://www.techniques-ingenieur.fr/base-documentaire/procedes-chimie-bio-agro-th2/operations-unitaires-tri-et-traitement-des-liquides-et-des-solides-42446210/mise-en-uvre-des-poudres-j2253/.

A titre indicatif, l'installation comprend :

- une unité d'alimentation en continu de la poudre (trémie vibrante muni d'un système de suivi de la masse au cours du temps),

- un circuit pneumatique d'accélération et de projection vers la cible. Un tel circuit est connu de l'homme du métier. A titre d'exemple, un circuit adapté à l'accélération et au transport de la composition pulvérulente selon l'invention vers une cible est décrit dans l'article « Experimental Investigations on Single Plate Fluid Energy Milling » de K. LECHSONSKI et U. MENZEL (Proceedings of First World Conference on Particles Technology, Vol 2, 1988, 297-323). A titre indicatif, des tuyaux de diamètre interne de 0,6 cm peuvent être utilisés afin d'effectuer le transport des particules à la buse. Le débit d'alimentation ainsi que la vitesse de projection peuvent être variables et pilotés par ordinateur. A titre indicatif, un débit d'alimentation en sorbitol pulvérulent adapté peut être de 1 g/sec. Typiquement, une vitesse de projection adaptée est par exemple 20 m/sec.

- une chambre d'impact munie d'une cible. Les caractéristiques de forme et de dimension de la chambre d'impact peuvent être aisément adaptées par l'homme du métier. Par exemple, une chambre ayant des dimensions de 15*15*15 cm est particulièrement approprié. La distance parcourue par les particules entre la buse d'accélération et la cible peut être modifiée en fonction de la vitesse d'impact souhaité. Typiquement, une distance d'un mètre permet de mettre en oeuvre le test d'impact. La cible peut être de type inclinable, de sorte à permettre une inclinaison de 45° par exemple. A titre indicatif, une cible adaptée au présent test est une cible d'une matière non déformable telle qu'un polymère ou un métal. Par exemple, la cible peut être en fer, en aluminium ou en acier tel qu'un acier poli. Les caractéristiques de forme et de dimension de la cible peuvent être aisément obtenues par l'homme du métier. La cible peut être de toute forme, par exemple circulaire et de taille suffisante pour permettre la projection de la poudre pulvérulente. Typiquement, une cible d'un diamètre de 6 cm permet d'effectuer le test d'impact.

- un système de séparation solide gaz peut être prévu, tel que par exemple par l'utilisation d'un filtre,

La composition pulvérulente est récupérée après impact pour être analysée. Préférentiellement, plusieurs cycles d'impact peuvent être effectués. Typiquement, 3 cycles d'impact sont effectués.

L'analyse des particules après le test d'impact peut être effectuée par granulométrie laser, conformément à la méthode décrite dans la Pharmacopée Européenne 6.0 N° 01/2008 :20931 p.311. Par exemple en utilisant un appareil de Type Mastersizer (Model : Meyvis MZ63). Afin d'avoir les résultats les plus fiable possible, une dispersion préalable de la poudre dans un solvant approprié qui ne provoque ni la dissolution des particules ni leur agglomération est recommandé. A titre d'exemple, une huile de tournesol ne contenant aucune trace d'eau peut être utilisée.

L'invention concerne également un procédé de préparation d'une composition pulvérulente comprenant :

• une étape de cristallisation d'un sirop de sorbitol comprenant un rapport A sorbitol/(mannitol +arabitol) compris entre 105 à 150, préférentiellement 110 à 149 ou 110 et 145

- une étape de granulation de la poudre obtenue par voie humide à l'aide d'un liant, préférentiellement le liant est un sirop de sorbitol préférentiellement un sirop de sorbitol comprenant un rapport A sorbitol/(mannitol +arabitol) compris entre 105 à 150, préférentiellement 110 à 149 ou 110 et 145 et

- une étape de maturation, par séchage, de la composition granulée ainsi obtenue,

- optionnellement, une étape de refroidissement de la composition granulée obtenue préférentiellement à une température inférieure à 10°C, préférentiellement, entre 10 et -10°C, plus préférentiellement entre 8 et -8°C, typiquement entre 5 et -5°C.

Typiquement, les étapes de cristallisation et de granulation sont effectuées simultanément, préférentiellement, par atomisation, extrusion, granulation ou pan-agglomération. Par exemple, l'étape de cristallisation et/ou de granulation sont mises en oeuvre dans un mélangeur-granulateur continu, une tour d'atomisation, une extrudeuse ou un récipient rotatif ouvert (appelé pan).
Avantageusement, les étapes de cristallisation et/ou de granulation sont mises en oeuvre par pulvérisation d'un liant pouvant être de l'eau ou un sirop de sorbitol présentant un rapport A compris entre 105 à 150 sur une composition pulvérulente de sorbitol en mouvement. Ladite composition pulvérulente de sorbitol est mise en mouvement par agitation ou dans un flux d'air. Typiquement, ledit sirop de sorbitol présente une matière sèche comprise entre 65 et 99,9%, préférentiellement comprise entre 70 et 99,8%, typiquement, comprise entre 99,5 et 99,8%. Préférentiellement, ladite composition pulvérulente présente également, un rapport A compris entre 105 à 150. La composition pulvérulente de sorbitol servant d'amorce pour la cristallisation en début de procédé puis les cristaux obtenus sont granulés au cours et en fin de procédé.
Selon un mode de réalisation, les étapes de cristallisation et de granulation sont effectuées à l'intérieur d'un récipient rotatif ouvert, d'axe de rotation éventuellement incliné de 25 à 60° par rapport à l'horizontale. Avantageusement, la vitesse de rotation du récipient est de 5 à 30 tours par minutes (tpm). Typiquement, ledit sirop de sorbitol est pulvérisé sur un lit de poudre de sorbitol mis en mouvement par la rotation du récipient. Ledit sirop présente une matière sèche supérieure à 90% préférentiellement supérieure à 99% typiquement, comprise entre 99,5 et 99,8%. La température est maintenue entre 90°C et 95°C dans le récipient. Le ratio sirop de sorbitol / composition pulvérulente (masse/masse) est d'environ 1 :1 à 1 :30.
Selon un autre mode de réalisation, les étapes de cristallisation et/ou de granulation sont effectuées dans un mélangeur-granulateur continu. Typiquement, le mélangeur-granulateur est équipé d'un axe avec des couteaux disposés en pales et d'un système de pulvérisation de liquides par buses d'injection. A titre indicatif, de tels mélangeurs granulateurs sont par exemple de type FLEXOMIX vertical commercialisé par la société HOSOKAWA SCHUGI, ou de type CB horizontal commercialisé par la société LÖDIGE ou de type TURBOCRYSTALLIZER commercialisé par VOMM IMPIANTI E PROCESSI S.R.L. La composition pulvérulente de sorbitol ainsi que le sirop de sorbitol sont introduits en continu et la composition granulée obtenue est déchargée en continu préférentiellement sur un séchoir pour l'étape de maturation. Typiquement, le mélangeur-granulateur est alimenté par un flux de composition pulvérulente de sorbitol et de sirop de sorbitol avec un ratio sirop de sorbitol / composition pulvérulente (masse/masse) 1 :3 à 2 :1, préférentiellement, 1 :1,5 à 1 :1. En outre, le sirop de sorbitol présente une teneur en matières sèches de 97 à 99,9%, typiquement, entre 99,5 et 99,8%. Avantageusement, le sirop de sorbitol est pulvérisé à une température de 110°C. L'arbre à lame du granulateur est entraîné en rotation à une vitesse de 400 à 3000 tours par minute, environ 700tpm à 1500tpm. La paroi intérieure est thermostatée à une température comprise entre -15 ° C et 5 ° C. Avec un temps de séjour moyen de 30 secondes, le sorbitol cristallisé granulé est évacué en continu à une température d'environ 55°C.
Selon un autre mode de réalisation, les étapes de cristallisation et de granulation sont effectuées en tour d'atomisation par exemple une tour de type MSD (Multi-Stage Dryer). Typiquement, la poudre de sorbitol est introduite dans la tour et un sirop de sorbitol à 65 à 80% de matières sèches est pulvérisé sur la poudre de sorbitol. Le ratio sirop de sorbitol / composition pulvérulente (masse/masse) est d'environ 1 :1 à 1 :4. Par exemple, la tour est alimentée avec un débit de sirop de sorbitol de l'ordre de 300 kg/h avec du sorbitol poudre à un débit compris entre 350 et 800 kg/h.
Suivant la tour d'atomisation choisie, l'homme du métier sera à même de déterminer les températures suivant les flux d'air. Typiquement, la température de l'air d'alimentation de la tour est comprise entre 100 et 150°C, et la température du lit statique à une valeur comprise entre 60 et 80°C.
Selon un autre mode de réalisation, les étapes de cristallisation et de granulation sont effectuées par extrusion. Typiquement, les étapes de cristallisation et de granulation sont effectuées dans une extrudeuse comprenant plusieurs fourreaux munis de systèmes de refroidissement et délimitant trois zones. Le sirop de sorbitol est introduit dans la première zone et est maintenu à une température préférentiellement supérieure à 80°C, typiquement entre 85-95 C. Avantageusement, la composition pulvérulente est introduite dans la seconde zone, le mélange est préférentiellement maintenu à une température comprise entre 75 à 90°C. Dans la troisième zone, la température du mélange est réduite préférentiellement à une température d'environ à 70 à 80°C jusqu'à la buse d'extrusion.

La vis de l'extrudeuse est de préférence maintenue à 40-60tpm. L'extrudeuse est de préférence une extrudeuse à deux vis. Typiquement, le débit du sirop de sorbitol est de préférence de 20-40kg / h, le temps de séjour du sirop de sorbitol est d'environ de 1 à 2 minutes.

Avantageusement, ladite solution de sorbitol présente 85 à 99,9% en matières sèches préférentiellement, 95 à 98% de MS. La proportion sirop de sorbitol/ composition pulvérulente de sorbitol est de 2 :1 à 1 :1.

Selon le procédé de l'invention, l'étape de maturation comprend une mise en mouvement des granules obtenues à une température comprise entre 50 et 90°C durant 0,5 à 7 heures, typiquement entre 3 et 5 heures. Par exemple, l'étape de maturation peut être réduite à moins d'une heure dans le cadre de l'extrusion ou à environ 2 à 4 heures dans le cadre de l'atomisation, la granulation continue ou la pan agglomération.

L'étape de maturation vise à réduire l'humidité du produit et à induire la recristallisation des polymorphes instables de sorbitol en polymorphes stables.

Typiquement, le procédé selon l'invention comprend une étape de broyage et / ou tamisage. Les procédés de broyage et de tamisage sont bien connus de l'homme du métier. Typiquement, l'étape de tamisage s'effectue préférentiellement successivement sur des tamis de 800 et 400 microns préférentiellement des tamis de type industriels continus. De tels tamis sont connus de l'homme de métier. Optionnellement, les particules retenues sur les tamis sont à nouveau broyées puis tamisées afin d'obtenir la répartition granulométrique selon l'invention. Typiquement, le broyeur utilisé peut être à pale, à marteau ou à broche. Les tamis utilisés peuvent être centrifuges ou vibrants. Le procédé selon l'invention comprend optionnellement une étape d'élimination des fines particules par définage préférentiellement, par lit fluidisé et/ou par classification (classificateur zig zag ou type VENTOPLEX® commercialisés par HOSOKAWA ALPINE)

L'étape de refroidissement de la composition pulvérulente est particulièrement avantageuse en ce qu'elle en facilite le broyage en évitant l'encrassement du broyeur et l'utilisation de contraintes de broyages excessives qui peuvent générer des quantités considérables de fines particules et par conséquent l'encrassement de l'atelier. Cette étape de refroidissement est particulièrement avantageuse pour obtenir après broyage et tamisage une poudre présentant la répartition granulométrique selon l'invention. Typiquement une telle étape de refroidissement est mise en oeuvre par un refroidisseur, par exemple un refroidisseur verticale à plaques vibrantes adapté pour les matières solides en vrac de tels refroidisseurs sont connus de l'homme du métier. Avantageusement, les étapes de broyage, de dépoussiérage et de tamisage sont réalisées avec un air ayant une humidité absolue entre 3 et 5 g d'humidité par kg d'air.

L'invention concerne également une gomme à mâcher comprenant 2 à 85% (w/w) de la composition pulvérulente selon l'invention.

Par « *gomme à mâcher* » on entend une composition comprenant une partie insoluble dans l'eau ou la salive constituée par la gomme base et une partie soluble comprenant au moins un polyol ou un mélange de polyols parmi lesquels la composition pulvérulente selon l'invention. Plus particulièrement par gomme à mâcher on entend, une composition comprenant une gomme base, un agent de charge tel qu'un édulcorant ou un polyol (ou sucre alcool) par exemple, choisi parmi le sorbitol, le maltitol, le xylitol ou leur mélange, au moins un agent plastifiant notamment choisi parmi un sirop de polyol, la glycérine, la lécithine ou leur mélange, et au moins un arôme. Préférentiellement, la gomme à mâcher comprend, une gomme base et la composition pulvérulente selon l'invention.

Différentes formules de gommes à mâcher ainsi que leur mode d'obtention sont largement décrits dans l'art antérieur et notamment dans «Formulation and Production of Chewing and Bubble Gum » par Fritz, Douglas p.142. De façon générale, les gommes à mâcher sont obtenues par une adjonction séquentielle des différents ingrédients du chewing-gum (∼15-20 minutes) dans un malaxeur du marché bien connu de l'homme du métier, par exemple un malaxeur double enveloppe permettant un contrôle fin de la température de sorte à permettre un assouplissement de la gomme base et une régulation de la température de la masse de chewing-gum par exemple à 50°C durant le procédé d'obtention de la gomme à mâcher.

Plus particulièrement, on entend par « *composition de gomme à mâcher* » une composition comprenant une gomme base et optionnellement, un agent de charge tel qu'un édulcorant ou un polyol (ou sucre alcool) choisi parmi le sorbitol, le maltitol, le xylitol, le lactitol, l'érythritol, l'isomalt ou leur mélange, au moins un agent plastifiant notamment choisi parmi un sirop de polyol, la glycérine, la lécithine ou leur mélange, et au moins un arôme. La gomme à mâcher peut comprendre en outre, un édulcorant intense notamment choisi parmi l'Aspartame, l'Acésulfame, la Thaumatine, la Saccharine ou le Cyclamate.

On entend par « *agent de charge* », un édulcorant tel que le D-Glucose, le saccharose, le sucralose ou un polyol, préférentiellement, un mélange de polyols tel que le sorbitol et le xylitol, le sorbitol et le mannitol ou le sorbitol et le mannitol.

Préférentiellement, la gomme à mâcher est sans sucre.

L'invention porte également sur une méthode de production d'une gomme à mâcher comprenant les étapes suivantes consistant à

- obtenir une gomme base

- mélanger la gomme base avec une composition pulvérulente selon l'invention,

- optionnellement, ajouter l'un quelconque des éléments choisis parmi un agent plastifiant, un agent de charge, un arôme et leur mélange.

L'invention concerne également la gomme à mâcher directement obtenue par la mise en oeuvre de ce procédé.

Bien qu'ayant des significations distinctes, les termes « comprenant », « contenant », « comportant » et « consistant en » ont été utilisés de manière interchangeable dans la description de l'invention, et peuvent être remplacés l'un par l'autre.

D'autres caractéristiques, aspects, objets et avantages de la présente invention apparaîtront encore plus clairement à la lecture de la description et des exemples qui suivent.

**Exemple 1 : Elaboration des poudres et composition chimique**

Des solutions de sorbitol sont obtenues par hydrogénation de sirops de dextrose comprenant plus de 99% de dextrose, de 0,1 à 0,4% de fructose et de 0,3 à 0,5% de disaccharides. L'hydrogénation est effectuée en discontinu suivant les conditions décrites dans la référence Roland Albert et al, Chem Ing Tech 52 (1980) Nr 7 S. 582 - 587. La réaction est arrêtée lorsque le taux de conversion atteint 99,8%.

Les sirops obtenus par hydrogénation sont analysés par HPLC afin de déterminer leur composition selon la méthode ISO 10504 :2013. L'analyse HPLC est menée à partir de solutions diluées à 10 % masse par masse de solution selon les conditions suivantes :

- Eluent : eau purifiée dégazée et filtrée avec une membrane 0.22 $\mu$m
- Colonne : Ca++ form, Type HPX, 87C (Biorad cat.n° 125-0095)
- Détecteur : réfractométrie différentielle
- Température de séparation : 80-85°C
- Volume injecté : 10 $\mu$L
- Débit d'élution : 0.5 mL/min

L'HPLC (SHIMADZU) est préalablement calibrée selon les recommandations du fournisseur avec des solutions étalons de très haute pureté (SIGMA ALDRICH). Le calcul de la concentration par l'utilisation de l'HPLC est effectué selon la méthode ISO 10504 :2013. Plus spécifiquement, ce calcul de concentration de chaque composé prend en compte les facteurs de corrections spécifiques aux différents composés présents dans l'échantillon ainsi que la surface de chaque pic présent dans le chromatogramme.

### La concentration de différents composés « i » exprimée en (%)

$$= \frac{\text{KFi x } area_i \times 100}{\sum_{i=1}^{n}(KFi \times area_i)}$$

Avec : KFi = facteur de correction pour chaque composé i

Area$i$= surface du pic correspondante au composé i

Une fois les différentes mesures effectuées le ratio sorbitol/(mannitol + arabitol) est calculé pour chaque sirop de sorbitol obtenu. Afin de déterminer l'effet du rapport sorbitol/(mannitol + arabitol) sur la poudre obtenue, différents sirops ayant des matières sèches d'environ 70 % et comprenant des rapports sorbitol/(Mannitol + Arabitol) différents sont préparées :

- Solution 1 (Sol 1) : $R_{Sol\,1}$ = 129.1

- Solution 2 (Sol 2) : $R_{Sol\,2}$ =122.7

- Solution 3 (Sol 3) : $R_{Sol\,3}$ = 140.3

Les compositions pulvérulentes ayant des ratios (R) différents de Sorbitol/(Mannitol + Arabitol) ont été obtenues par pan agglomération tel que décrit dans la demande de brevet GB1481846 (ROQUETTE FRERES SA). Plus particulièrement, les solutions Sol 1, Sol 2 et Sol 3 ont étés introduites dans une installation d'évaporation. Lorsque la quantité requise de solution de sorbitol est introduite dans l'installation, la température est progressivement augmentée jusqu'à 125°C et la pression est diminuée en dessous de 20 mm de mercure. Au bout de deux heures d'évaporation, du sorbitol fondu ayant une matière sèche de 99,8 % est obtenu. Le sorbitol fondu est par la suite mis dans une cuve de stockage avant d'être pompé et pulvérisé sous forme de globules de diamètres inférieures à 0,1 mm grâce à une buse de pulvérisation appropriée (diamètre = 0,4 mm) dans une enceinte cylindrique, inclinée et en rotation appelée « pan » ou tambour rotatif (diamètre = 3,6 m ; hauteur = 1,2 m, inclinaison = 30° par rapport à l'horizontal). La pression utilisée pour pomper le sorbitol fondu jusqu'à la buse est égale à 3,5 Kg/cm2. Simultanément avec cette dispersion du sorbitol fondu, une quantité équivalente de sorbitol cristallin est apportée. La pan tourne à une vitesse de 7 rotations par minute et cela permet d'obtenir des granules de diamètre égal à 4 mm. La pan est équipée d'un couteau racleur pour assurer un meilleur mélange des particules de sorbitol avec les globules de sorbitol fondu. La température dans la pan est maintenue au moins à 90°C.

Le temps moyen nécessaire pour qu'une particule ou globule intègre les granules de 4 mm avant de quitter la pan est d'environ une demi-heure. Par la suite les granules de 4 mm sont introduites dans un cylindre incliné en rotation (Diamètre = 1,8 m, longueur = 8,5 m, inclinaison = 5°, vitesse de rotation = 10 rotations/min) et y restent environ 5 heures à une température entre 90 et 95°C. Cette étape est appelée maturation et a pour objectif d'augmenter la cristallinité en favorisant la recristallisation des formes instables de sorbitol en forme stables. Celle-ci est assurée en maintenant les granules en mouvement à des températures comprises entre 50 et 90°C. A la sortie de l'étape de maturation les granules sont refroidis jusqu'à une température proche de zéro ensuite broyées, tamisés et dépoussiérés grâce à une installation classique appropriée de calibrage des produits alimentaires pulvérulents.

Les étapes de broyage, dépoussiérage et tamisage sont réalisées avec un air ayant une humidité absolue la plus basse possible (environ 3g d'humidité par kg d'air).

A titre indicatif, des solutions ayant des ratios sorbitol/ (mannitol+arabitol) inférieurs à 50 ont pu être obtenus si nécessaire par ajout de mannitol et/ou d'arabitol. Néanmoins, ces derniers ont engendré de nombreux problèmes d'encrassement dans la pan dû à la difficulté de cristalliser le sorbitol fondu et par conséquent l'impossibilité de réaliser l'agglomération. Ceci confirme qu'un taux élevé en impuretés spécifiques telle que le mannitol et/ou l'arabitol peut inhiber la cristallisation du sorbitol. Les inventeurs ont de plus observé que l'ajustement du taux du mannitol -arabitol dans la composition de sorte à obtenir des ratios Sorbitol/(mannitol+arabitol) compris entre 120 et 150 permettait d'améliorer considérablement la stabilité du procédé (encrassement de la pan) et d'obtenir la poudre ayant les caractéristiques décrites ci-dessous.

Les compositions pulvérulentes de sorbitol obtenues correspondant aux solutions Sol 1, Sol 2 et Sol 3 sont dénommées ci-après respectivement CPS1, CPS2 et CPS3. Les rapports A en Sorbitol/(Mannitol+ Arabitol) correspondant à ces compositions ont été déterminés par HPLC comme précisé précédemment (voir tableau 1). A titre indicatif, plusieurs produits commerciaux sont rajoutés dans le même tableau.

Tableau 1: Rapports A Sorbitol/(Mannitol+Arabitol) des différentes compositions pulvérulentes

| Composition | Nom du produit | A: Sorbitol/(Mannitol + Arabitol) |
|---|---|---|
| **CPS1** | **Présente invention : Produit 1** | 129.1 |
| **CPS2** | **Présente invention : Produit 2** | 122.7 |
| **CPS3** | **Présente invention : Produit 3** | 140.3 |
| CPS4 | NEOSORB P60 W (ROQUETTE FRERES) | 176.6 |
| CPS5 | NEOSORB P60 W (ROQUETTE FRERES) | 157.0 |
| CPS6 | NEOSORB P60 (ROQUETTE FRÈRES) | 154.5 |
| CPS7 | NEOSORB P60 (ROQUETTE FRÈRES) | 170.5 |
| CPS8 | SORBIDEX S16603 (CARGILL) | 137.1 |
| CPS9 | SORBIDEX S16603 (CARGILL) | 141.2 |
| CPS10 | SORBITOL T (ECOGREEN) | 153.5 |
| CPS11 | SORBITOL T (ECOGREEN) | 330.6 |
| CPS12 | PARTECK SI 150 (MERCK) | 202.0 |

**Exemple 2 : Distribution granulométrique et densité en vrac**

Les compositions pulvérulentes de sorbitol CPS1 à CPS12 de l'exemple 1 ont été analysées pour déterminer leurs distributions granulométriques selon la méthode RETSCH (tableau 2).

La méthode RETSCH est mise en oeuvre conformément à la méthode décrite dans la Pharmacopée Européenne 6.0 N° 01/2008 :20938 p.325. Plus particulièrement la granulométrie est mesurée à l'aide d'une tamiseuse RETSCH, modèle AS200 selon les recommandations du constructeur. 100 g de sorbitol pulvérulent sont pesés et mélangés gentiment avec 1 à 2 % d'agent d'écoulement libre « Free flowing agent » type SIPERNAT® 22 S. Le mélange est par la suite tamisé à travers une tour de tamis empilés de façon étanche les uns sur les autres. Les différents tamis utilisés sont certifiés (ISO 3310-1) et possèdent respectivement des seuils de coupures de 75, 100, 250, 400 et 600 $\mu$m. Le tamisage est réalisé pendant 10 minutes avec une amplitude de 1,5. Pour la pesée des différents tamis avant et après tamisage une balance de précision (0,1 g) est utilisée. Les mesures sont donc effectuées à $\pm$0,1.

Tableau 2 : Distributions granulométriques des différentes compositions pulvérulentes

| Compositions | <75 $\mu$m | 75-100 $\mu$m | 100-250 $\mu$m | 250-400 $\mu$m | 400-600 $\mu$m |
|---|---|---|---|---|---|
| CPS1 | 1,6 | 4,4 | 51,6 | 41,8 | 0,5 |
| CPS2 | 2,1 | 4,1 | 49,4 | 44,1 | 0,3 |
| CPS3 | 5 | 5,6 | 54,3 | 34,9 | 0,2 |
| CPS4 | 8,8 | 6,4 | 50,5 | 31,2 | 3,1 |
| CPS5 | 8,5 | 8,4 | 46,1 | 31,5 | 5,5 |
| CPS6 | 18,8 | 9,2 | 48,5 | 22,7 | 0,8 |
| CPS7 | 17,3 | 8,7 | 50,5 | 22,9 | 0,6 |
| CPS8 | 11,8 | 9,2 | 42 | 35,8 | 1,2 |
| CPS9 | 13,9 | 9,1 | 49 | 27,1 | 0,9 |
| CPS10 | 1,9 | 1,1 | 58,6 | 36,9 | 1,5 |
| CPS11 | 2,3 | 2,7 | 56 | 38 | 1 |
| CPS12 | 7,4 | 9,6 | 55 | 25 | 3 |

Les compositions pulvérulentes de sorbitol CPS1 à CPS12 ont été analysées pour déterminer leur densité en vrac (tableau 3). La densité en vrac est mesurée selon la méthode décrite dans la Pharmacopée Européenne 6.0 N° 01/2008 :20915 p.285. Plus particulièrement, la densité en vrac de la composition pulvérulente de sorbitol est mesurée grâce à une machine de type ERWEKA (ERWEKA GmbH SVM22). Un volume de 250 mL de poudre est introduit progressivement à l'aide d'une spatule et d'un entonnoir maintenu à 6 cm de la limite supérieur d'une éprouvette graduée en verre (Volume = 250 mL) de sorte qu'aucun compactage n'est obtenu lors de remplissage. La densité en vrac est alors déduite à partir de la différence de masse de l'éprouvette avant et après remplissage selon la formule suivante :

$$\text{Densité en Vrac (g/L)} = [(\text{masse de l'éprouvette} + \text{ échantillon}) - (\text{masse de l'éprouvette vide})] \times 4$$

La densité tassée est obtenue en lisant le volume de poudre dans l'éprouvette après 500 tapes consécutives (jusqu'à ce que le volume de poudre devienne constant). Elle est calculée selon la formule suivante :

$$\text{Densité tassée (g/L)} = \frac{[(\text{masse de l'éprouvette} + \text{ échantillon}) - (\text{masse de l'éprouvette vide})] \times 1000}{\text{Volume occupé par la poudre après tassement}}$$

Tableau 3 : Densité en vrac des différentes compositions pulvérulentes

| Composition pulvérulente | Densité en vrac (g/L) | Densité tassée : 500 tappes (g/L) | Indice d'haussner |
|---|---|---|---|
| **CPS1** | **667** | **719** | **1,078** |

(suite)

| Composition pulvérulente | Densité en vrac (g/L) | Densité tassée : 500 tappes (g/L) | Indice d'haussner |
|---|---|---|---|
| **CPS2** | **665** | **704** | **1,059** |
| **CPS3** | **658** | **697** | **1,059** |
| CPS4 | 669 | 730 | 1,091 |
| CPS5 | 659 | 736 | 1,117 |
| CPS6 | 643 | 727 | 1,131 |
| CPS7 | 654 | 737 | 1,127 |
| CPS8 | 710 | 815 | 1,148 |
| CPS9 | 720 | 825 | 1,146 |
| CPS10 | 570 | 617 | 1,082 |
| CPS11 | 616 | 672 | 1,091 |
| CPS12 | 448 | 498 | 1,112 |

Le tableau 3 montre que les compositions pulvérulentes CPS1, CPS2 et CPS3 fabriquées dans le cadre de cette invention possèdent les indices d'Haussner les plus faibles et ceci est synonyme d'une meilleure aptitude à l'écoulement.

Les tableaux 2 et 3 montrent qu'à l'exception des compositions CPS10 et CPS11 (produits ayant des densités relativement faibles), les compositions pulvérulentes CPS1, CPS2 et CPS3 ont à la fois les ratios d'Haussner les plus faibles et les taux de particules fines (Particules <75 $\mu$m) les plus faibles. Ces dernières caractéristiques sont particulièrement avantageuses en ce qu'elles confirment une très bonne aptitude à l'écoulement de la poudre la rendant particulièrement adaptée au transport pneumatique. En effet, une poudre ayant de telles caractéristiques permet une alimentation du transport pneumatique en un flux constant (sans formations d'agrégats ou de mottes). Ainsi, une telle poudre permet un fin contrôle du rapport produit sur air de transport qui garantit une constance des conditions de transport en terme de contraintes exercées sur la poudre et par conséquent, évite au cours du temps, les fluctuations de granulométrie à l'issue du transport.

**Exemple 3 : Surface spécifique**

Les compositions pulvérulentes de sorbitol CPS1 à CPS12 ont été analysées pour déterminer leurs surfaces spécifiques selon la méthode BET (tableau 4). Les surfaces spécifiques sont mesurées conformément à la méthode décrite dans la Pharmacopée Européenne 6.0 N°01/2008 :20926 p.306. La surface spécifique est mesurée par un analyseur de surface spécifique (Micrometrics GEMINI V, Sample Degas System Vac prep 061) basé sur un test d'absorption de l'azote sur la surface du produit soumis à l'analyse, en suivant la technique décrite dans l'article « BET Surface Area by Nitrogen Absorption » de S. BRUNAUER et al. (Journal of Americain Chemical Society, 60, 309, 1938). Les mesures sont effectuées avec une étape de dégazage préalable sous vide des échantillons à 42°C pendant 32 heures. A titre indicatif, plusieurs produits commerciaux sont rajoutés dans le même tableau.

Tableau 4 : Surfaces spécifiques des différentes compositions pulvérulentes

| Composition | Surface spécifique (m2/g) |
|---|---|
| **CPS1** | 1.04 |
| **CPS2** | 0.87 |
| **CPS3** | 1.14 |
| CPS4 | 0.93 |
| CPS5 | 1.10 |
| CPS6 | 1.60 |
| CPS7 | 1.60 |

(suite)

| Composition | Surface spécifique (m2/g) |
|---|---|
| CPS8 | 1.80 |
| CPS9 | 1.60 |
| CPS10 | 0.70 |
| CPS11 | 0.70 |
| CPS12 | 0.60 |

**Exemple 4 : Stabilité mécanique**

Les compositions pulvérulentes de sorbitol CPS1 à CPS5 ont été analysées pour déterminer leurs stabilités mécaniques (tableau 5). A titre indicatif, les CPS4 et CPS5 sont des produits commerciaux obtenus par la technologie de pan agglomération. La mesure de la stabilité mécanique consiste à accélérer les particules de la composition pulvérulente à l'aide d'un jet d'air et la projeter sur une cible inclinée à la fin de la course. La vitesse de l'impact, l'inclinaison de la cible et le débit d'alimentation en poudre sont modulables selon le souhait du manipulateur. Le schéma de principe de cette machine est décrit dans l'article « *Mise en OEuvre des Poudres Granulation Humide : bases et théorie » de S. KHASHAYAR et P. GUIGON (*Techniques de l'Ingénieur Opérations Unitaires : Tri et Traitement des Liquides et des Solides, ref. article : j2253, 2014), URL = httpllwww.techniques-ingenieur.fr/base-documentairelprocedes-chimie-bio-agro-th2/operations-unitaires-tri-et-traitement-des-liquides-et-des-solides-42446210/mise-en-uvre-des-poudres-j2253/.

A titre indicatif, l'installation est formée :

- d'une unité d'alimentation en continu de la poudre (trémie vibrante muni d'un système de suivi de la masse au cours du temps),

- d'un circuit pneumatique d'accélération et de transport vers la cible inclinable. Ce circuit est construit selon le principe décrit dans l'article « Experimental Investigations on Single Plate Fluid Energy Milling » de K. LECHSONSKI et U. MENZEL (Proceedings of First World Conference on Particles Technology, Vol 2, 1988, 297-323*),*

- d'une chambre d'impact munie d'une cible inclinable et

- d'un système de séparation solide gaz muni d'un filtre.

L'appareil offre la possibilité de faire passer la composition pulvérulente plusieurs fois dans le circuit (plusieurs cycles).

Les conditions opératoires utilisées pour comparer les différentes poudres citées sont identiques entre elles et sont les suivantes :

- débit d'alimentation en composition pulvérulente : 1g/sec,
- vitesse d'air : 20 m/sec,
- distance parcourue par les particules entre la buse d'accélération et la cible inclinée = 1m,
- diamètre interne du tuyau reliant la buse d'accélération et la cible inclinée = 0,6 cm,
- inclination de la cible = 45°,
- forme, aspect, et diamètre de la cible inclinée =acier poli, circulaire, diamètre 6 cm,
- dimensions de la chambre d'impact = 15*15*15 cm,
- nombre de cycles = 3.

Le débit d'alimentation de la machine (composition pulvérulente et air sont pilotés par ordinateur). Toutes les parties de la machine en contact avec le produit sont reliées à une masse pour éviter l'adsorption de la poudre par effet électrostatique.

A l'issue des trois cycles d'impact consécutifs les compositions pulvérulentes sont récoltées et analysées par granulométrie laser en utilisant un appareil de Type Mastersizer (Model : Meyvis MZ63). Les conditions opératoires sont conformes à la méthode décrite dans la Pharmacopée Européenne 6.0 N° 01/2008 :20931 p.311). Afin d'avoir les résultats les plus fiables possible, la poudre est préalablement dispersée dans de l'huile de de tournesol (exempte d'eau). Toutes les compositions citées dans ce brevet ont été analysées dans des conditions identiques.

L'indice de stabilité mécanique D(v,0.1) (ISM$_{D(v,0.1)}$), exprimée en %, représente la variation de D(v,0.1) lorsque la composition pulvérulente de sorbitol est soumise à 3 cycles d'impact consécutifs à 20 m/sec. Par exemple une poudre ayant :

Un D(v,0.1) avant le test d'impact = 120 $\mu$m
Un D(v,0.1) après le test d'impact (3 cycles consécutifs à 20 m/sec) = 46 $\mu$m

$$\text{L'indice de stabilité mécanique (ISM)} D(v, 0.1) = \frac{(120 - 46) \times 100}{120} = 61,6\,\%$$

Plus l'ISM$_{D(v,0.1)}$ est élevé et plus la poudre est mécaniquement fragile. Le D(v,0.1) est défini comme étant le diamètre maximum des fines particules occupant 10 % du volume total de la poudre.

Tableau 5 : Mesure de l'Indice de Stabilité Mécanique des poudres

| Compositions | % de variation de D(v,0.1): ISM $_{D(V,0.1)}$ | % de variation de D(v,0.5) : ISM$_{Dv0.5}$ | % de variation de D(v,0.9) : ISM$_{Dv0.9}$ |
|---|---|---|---|
| **CPS1** | 48,9 | 16 | 11,78 |
| **CPS2** | 47,8 | 14,5 | 8,73 |
| **CPS3** | 52 | 15,5 | 8,46 |
| CPS4 | 71,4 | 26 | 18,34 |
| CPS5 | 69,3 | 22,1 | 13,68 |

Les produits selon l'invention, à savoir CPS1 à CPS3 présentent une variation de la D(v, 0,1) de moins de 53% suite au test d'impact

On note une nette différence de l'ordre de 20% entre les échantillons CPS1 à CPS3 et les échantillons CPS4 et CPS5 correspondant aux produits de l'art antérieur.

Autrement dit l'utilisation d'un produit du type CPS1 à CPS3 aura tendance à créer beaucoup moins de fines que les produits de type CPS4 et CPS5 lors de son transport par pneumatique par exemple dans les lignes de production.

Cette stabilité des poudres selon l'invention s'avère particulièrement avantageuse pour des procédés dans lesquels d'importantes forces de cisaillement sont appliquées et/ou une faible variation dans le taux de fines ou dans la répartition granulométrique de la poudre induit des conséquences importantes sur la mise en oeuvre d'un procédé ou sur les qualités notamment organoleptiques du produit fini. Tel est le cas des procédés de préparation de chewing-gum (CG).

**Exemple 5 amélioration qualités organoleptiques dans le CG**

L'évaluation organoleptique des gommes à mâcher contenant des poudres de sorbitol a été réalisée en utilisant la méthode d'évaluation de la gomme à mâcher comme décrit à la p. 81 et 85 du livre "Formulation and Production of Chewing and Bubble Gum" (ISBN = 0904725103).

La composition de chewing-gum de test est représentée dans le tableau 1:

Tableau 6 : Compositions des gommes à mâcher.

| Ingrédients chewing-gum | Quantité (g/100g) |
|---|---|
| Sorbitol en poudre | 54,2 |
| Xylitol en poudre | 4,8 |
| Base de gomme Cafosa Geminis-T | 30,7 |
| Maltitol poudre | 3,3 |
| Sirop de maltitol (MS : 80%) | 7,0 |
| Arôme menthe Mane | qsp |

Différentes poudres de sorbitol CPS13, CPS14 et CPS15 ont été obtenues selon l'exemple 1. Les différentes poudres testées sont référencées dans le tableau 7:

Tableau 7 : Distribution de taille des particules des échantillons évalués (100±0,1).

| Produit | < 75 μm | 75 - 100 μm | 100 - 250 μm | 250 - 400 μm | 400-600 μm |
|---|---|---|---|---|---|
| Référence | 5,8 | 10,8 | 53,8 | 28,7 | 0,9 |
| CPS 13 | 0,5 | 4,7 | 51,1 | 42,8 | 0,9 |
| CPS 14 | 1,4 | 4,1 | 50,3 | 43,6 | 0,6 |
| Produit commercial | 6,9 | 10,4 | 49,7 | 26 | 7 |
| CPS 15 | 0,8 | 3,1 | 44,3 | 50,5 | 1,4 |
| Référence : MERISORB® 200 commercialisé par TEREOS SYRAL. Produit commercial: NEOSORB P60W commercialisé par ROQUETTE FRERES. | | | | | |

L'analyse de la répartition granulométrique des poudres est effectuée à l'aide d'une tamiseuse RETSCH, modèle AS200 control 'g' conformément aux instructions du constructeur. Plus particulièrement, de la façon suivante: 100g de chacune des poudres sont additionnés de 1g de silice (SIPERNAT® 22S). La masse homogénéisée est tamisée par ledit-équipement avec une amplitude d'oscillation de 1,5mm pendant 10 minutes. Chaque tamis est ensuite pesé afin de mesurer le poids de chacune des fractions granulométriques et calculer une répartition granulométrique en pourcentages.

Lors de la fabrication des chewing-gums, il a été remarqué que comparativement à la poudre de référence et à celle du marché, les CPS13 et 14 permettent une réduction du temps de mélange de la composition dans le mélangeur à chewing-gums. Ceci constitue un avantage des CPS13 et 14 selon l'invention comparativement à l'ensemble des poudres testées.

Une fois les chewing-gums obtenus, les critères portant sur l'apparence du chewing-gum (surface lisse sans trou, arrêtes bien définies) ont été évalués. Les résultats observés sont similaires entre les CPS13, CPS14 et CPS15, la poudre de référence ainsi que la poudre commerciale.

L'évaluation sensorielle des chewing-gums a fait l'objet d'un protocole strict mis en oeuvre par un panel spécifiquement entraîné pour la dégustation des chewing-gums. Le protocole de dégustation de chewing-gums est documenté, il est plus particulièrement décrit dans « Formulation and production of chewing and bubble gum » de Douglas Fritz (Kennedys Books Ltd) - Hardcover (2008). Ce protocole s'organise en 3 phases.

La phase initiale correspond à l'attaque en bouche pendant les 10 premières secondes de dégustation; la phase intermédiaire jusqu'à 3 minutes, décrit précisément les propriétés sensorielles du chewing-gum en terme d'hydratation, de texture et de perception aromatique car c'est pendant cette période que la plupart des arômes et édulcorants sont extraits de la matrice. La phase finale au-delà de 3 minutes, caractérise le degré de stabilité des propriétés du chewing-gum dans le temps, en termes de consistance et perception aromatique principalement.

Les paramètres organoleptiques ont été évalués par un panel entrainé, composé de 9 personnes.

Au cours de la phase initiale (10 premières secondes) sont évaluées, la dureté d'attaque, la cohésion, la vitesse de perception et l'intensité aromatique. Au cours de la phase intermédiaire (10 secondes à 3 minutes) sont évalués, l'hydratation (temps mis par la matrice pour absorber la salive), la cohésion, la texture, l'effet collant sur les dents, la puissance aromatique, l'intensité sucrée, et le pouvoir rafraichissant. Enfin, lors de la phase finale (3 à 6 minutes), sont évalués la dureté, la texture, le collant aux dents, la taille du chewing-gum en bouche, la forme en bouche (entre deux mastications), la consistance, la largeur du fil lorsque le chewing-gum est étendu, la puissance aromatique, l'intensité sucrée et enfin, le pouvoir rafraîchissant. Le système d'évaluation utilise un système à 5 points correspondant à cinq grades ou score pour chacun des descripteurs. L'ensemble des paramètres définis ci-dessus ont été testés (phase initiale, phase intermédiaire et finale). Les scores et l'ensemble des paramètres testés sont décrits dans la référence ci-dessus.

Lors de son analyse, le panel a relevé que parmi l'ensemble des paramètres mesurés de nombreux paramètres ont été maintenus par l'utilisation des tamisés comparativement aux poudres de référence et celle du marché.

Seuls les paramètres pour lesquels une différence est observée sont détaillés ci-après. Les scores pour les paramètres testés sont définis dans le système comme ci-dessous (Tableau 8).

Dans le tableau 8, P1 correspond à la phase initiale (10 premières secondes), et P2 à la phase intermédiaire (entre 10 secondes et 3 minutes):

Tableau 8 : Scores des paramètres testés

|    | Score | 1 | 2 | 3 | 4 | 5 |
|----|-------|---|---|---|---|---|
| P1 | Dureté d'attaque | Ferme | | Normal | | Tendre |
| P2 | Texture | Granuleux | | | | Lisse |
| P2 | Puissance aromatique | Manque d'arôme | | Normal | | Brûle la langue |
| P2 | Intensité sucrée | Peu | | Normal | | Beaucoup |
| P2 | Pouvoir rafraichissant | Peu | | Normal | | Beaucoup |

Les valeurs modifiées obtenues par le panel entrainé sont données dans le tableau 9.

Tableau 9 : Evaluation organoleptique.

|  | Référence | CPS13, | CPS14 | Produit commercial | CPS15 |
|--|-----------|--------|-------|--------------------|-------|
| Dureté d'attaque | 3,1 | 2,3 | 2,4 | 3,7 | 2,4 |
| Texture | 3,2 | 3,5 | 3,5 | 3,0 | 2,7 |
| Puissance aromatique | 3,6 | 4,3 | 4,0 | 3,7 | 2,5 |
| Intensité sucrée | 3,0 | 3,3 | 3,4 | 3,2 | 2,9 |
| Effet rafraichissant | 3,3 | 4,0 | 3,7 | 3,4 | 2,5 |

Dans le cas des produits CPS13, CPS14 et CPS15, on observe une nette augmentation de la dureté d'attaque, dans la phase initiale (10 premières secondes) comparativement à la poudre de référence et à celle du marché.

Dans la phase intermédiaire (entre 10 secondes et 3 minutes) une intensification de la puissance aromatique, de l'intensité sucrée et de l'effet rafraichissant est observée pour les produits CPS13 et CPS14 mais pas du CPS15 comparativement à la poudre de référence et à celle du marché. L'effet de la distribution des particules, comme décrit dans le tableau 7, est net et clair.

Toutefois, il y a une limite à ce procédé de tamisage. Dans le cas où le produit est trop tamisé, comme dans le cas du CPS15, la dureté d'attaque reste identique, mais la perception aromatique, ainsi que l'effet rafraichissant, est clairement affectée d'une façon négative comparativement aux CPS13 et CPS14 mais plus encore comparativement à la référence ainsi qu'au produit commercial.

Ainsi, les CPS13 et CPS14 sont particulièrement avantageux en ce que l'amélioration de la puissance aromatique du chewing-gum par l'utilisation de ces poudres permet pour une même quantité de sorbitol dans le chewing-gum de réduire la quantité d'arôme pour obtenir une perception aromatique identique.

Les CPS13 et CPS14 permettent également de ressentir un effet sucré plus important ainsi qu'un effet rafraîchissant plus important que les sorbitols de référence et du marché ce qui permet d'intensifier le gout du chewing-gum obtenu.

Il est ainsi démontré pour la première fois, l'effet de la répartition granulométrique des poudres de sorbitol sur la perception aromatique, l'intensité sucré et l'effet rafraîchissant du chewing-gum obtenu.

On remarquera également que la variation de la répartition granulométrique du CPS15 en plus de réduire la puissance aromatique, l'intensité sucrée ainsi que l'effet rafraichissant des sorbitols connus induit également une structure granuleuse du chewing-gum, ce qui n'est pas désiré puisque cette sensation est désagréable sur la langue.

Cet essai démontre également que la réduction de fines particules améliore certes les caractéristiques organoleptiques du chewing-gum mais que cette réduction de fines doit répondre à certains critères. Autrement dit, la poudre de sorbitol ne doit pas être excessivement définée pour que l'amélioration des caractéristiques organoleptiques du chewing-gum soit observée.

Ainsi, une différence très fine de granulométrie de la poudre de sorbitol conduit à des effets détectables sur le chewing-gum final quant au caractère granuleux du chewing-gum en bouche ou de la perception aromatique l'intensité sucrée ou l'effet rafraîchissant (CPS13 ou CPS14 versus CPS15).

Plus spécifiquement, le présent exemple démontre que la poudre selon l'invention permet comparativement aux poudres de sorbitol du marché, i) de réduire les temps de mélange pour obtenir les chewing-gums comparativement aux produits de référence ii) d'obtenir un chewing-gum ayant une dureté d'attaque, une texture, une puissance aromatique, une intensité sucrée et un effet rafraichissant améliorés iii) tout en maintenant les caractéristiques du chewing-gum telles que la cohésion, la vitesse de perception, l'hydratation, la texture, l'effet collant ou la consistance.

**Revendications**

1. Composition pulvérulente présentant

   • au moins 96% de sorbitol (w/w) en matière sèche,
   • un rapport A du sorbitol / (mannitol + arabitol) (w/w) compris entre 105 à 150, préférentiellement de 110 à 149, et/ou
   un Indice de Stabilité Mécanique D(v,0.1) ($ISM_{D(v,0.1)}$) inférieur à 60%, préférentiellement, inférieur à 55%, l'$ISM_{D(v,0.1)}$ étant égal à :

$$ISM_{D(v,0.1)} = \frac{(D(v,0.1)a - D(v,0.1)b) \times 100}{D(v,0.1)a}$$

   dans lequel D(v,0.1)b correspond à la D(v,0.1) de la dite composition pulvérulente mesurée après un test d'impact comprenant trois cycles de projection de ladite composition pulvérulente à 20 m/sec sur une surface lisse non déformable, et D(v,0.1)a correspondant à la D(v,0.1) de la dite composition pulvérulente mesurée avant le test d'impact,
   • une densité en vrac de 630 à 700g/l,
   • préférentiellement, une surface spécifique comprise entre 0,6 et 1,8m$^2$/g.

2. Composition pulvérulente selon la revendication 1 **caractérisée en ce qu'**elle présente une densité tassée de 650 à 730g/l.

3. Composition pulvérulente selon l'une ou l'autre des revendications 1 et 2 **caractérisée en ce qu'**elle présente un rapport A compris entre 110 et 145.

4. Composition pulvérulente selon l'une quelconque des revendications 1 à 3, **caractérisée en ce qu'**elle présente une granulométrie moyenne de 100 à 400 microns.

5. Composition pulvérulente selon l'une quelconque des revendications 1 à 4, **caractérisée en ce qu'**elle est composée d'agglomérats de cristaux.

6. Composition pulvérulente selon l'une quelconque des revendications 1 à 5, **caractérisée en ce qu'**elle présente une distribution de taille des particules, déterminée par analyse granulométrique, utilisant un équipement RETSCH, comme suit:

   - de 0 à 2,3% en poids, de particules > 400 microns,
   - de 34,8 à 54,9% en poids, de particules comprises entre 250 et 400 microns,
   - de 42,7 à 57,9% en poids, de particules comprises entre 100 et 250 microns,
   - de 1,4 à 8,0% en poids, de particules comprises entre 75 et 100 microns et,
   - de 0,5 à 4,8% en poids, de particules < 75 microns, dont la somme des différentes fractions étant de 100% en poids.

7. Composition pulvérulente selon l'une quelconque des revendications 1 à 6, **caractérisée en ce qu'**elle présente une distribution de taille des particules, déterminée par analyse granulométrique, utilisant un équipement RETSCH comme suit

   - de 0 à 1% en poids, de particules > 400 microns,
   - de 40 à 45% en poids, de particules comprises entre 250 et 400 microns,
   - de 48 à 53% en poids, de particules comprises entre 100 et 250 microns,
   - de 3,5 à 8% en poids, de particules comprises entre 75 et 100 microns et,
   - de 0,5 à 2,5% en poids, de particules < 75 microns, dont la somme des différentes fractions étant de 100% en poids.

8. Procédé de préparation d'une composition pulvérulente selon l'une quelconque des revendications 1 à 7, **caractérisé en ce qu'**il comprend :

• une étape de cristallisation d'un sirop de sorbitol comprenant un rapport A sorbitol/(mannitol +arabitol) compris entre 105 à 150, préférentiellement entre 110 et 145,
• une étape de granulation de la poudre obtenue par voie humide à l'aide d'un liant, préférentiellement le liant est un sirop de sorbitol comprenant un rapport A sorbitol/(mannitol +arabitol) compris entre 105 à 150, préférentiellement entre 110 et 145
• une étape de maturation, par séchage, de la composition granulée ainsi obtenue
• optionnellement, une étape de refroidissement de la composition granulée obtenue préférentiellement, à une température inférieure à 10°C.

9. Procédé de préparation selon la revendication 8, **caractérisé en ce que** l'étape de cristallisation et/ou de granulation est réalisée dans un mélangeur-granulateur continu, une extrudeuse, une tour d'atomisation ou par pan agglomération.

10. Procédé de préparation selon la revendication 9, **caractérisé en ce que** ledit sirop de sorbitol utilisé durant l'étape de cristallisation et/ou de granulation présente une matière sèche comprise entre 65 et 99,9%, préférentiellement comprise entre 70 et 99,8%.

11. Gomme à mâcher **caractérisée en ce qu'**elle comprend 2 à 85% (w/w) d'une composition pulvérulente selon l'une quelconque des revendications 1 à 7.

12. Méthode de production d'une gomme à mâcher comprenant les étapes suivantes consistant à :

- obtenir une gomme base
- mélanger la gomme base avec une composition pulvérulente selon l'une ou l'autre des revendications 1 à 7,
- optionnellement, ajouter l'un quelconque des éléments choisis parmi un agent plastifiant, un agent de charge, un arôme et leur mélange.

**Patentansprüche**

1. Pulverzusammensetzung, aufweisend

• mindestens 96 % Sorbitol (Gew./Gew.) Trockensubstanz,
• ein Verhältnis A von Sorbitol/(Mannitol + Arabitol) (Gew./Gew.) im Bereich zwischen 105 und 150, vorzugsweise 110 und 149,
und/oder
einen mechanischen Stabilitätsindex D(v,0,1) ($ISM_{D(v,0.1)}$) kleiner 60 %, vorzugsweise kleiner 55 %, wobei der $ISM_{D(v,0.1)}$ gleich:

$$ISM_{D(v,0,1)} = \frac{(D(v,0,1)a - D(v,0,1)b) \times 100}{D(v,0,1)a}$$

ist, wobei D(v,0,1)b dem D(v,0,1) der Pulverzusammensetzung entspricht, gemessen nach einem Schlagtest, umfassend drei Aufsprühzyklen der Pulverzusammensetzung mit 20 m/sec auf eine nicht verformbare glatte Oberfläche, und D(v,0,1) a dem D(v,0,1) der Pulverzusammensetzung, gemessen vor dem Schlagtest, entsprechend,
• eine Schüttdichte von 630 bis 700 g/l,
• vorzugsweise eine spezifische Oberfläche im Bereich zwischen 0,6 und 1,8 $m^2$/g.

2. Pulverzusammensetzung nach Anspruch 1, **dadurch gekennzeichnet, dass** sie eine Klopfdichte von 650 bis 730 g/l aufweist.

3. Pulverzusammensetzung nach einem der Ansprüche 1 und 2, **dadurch gekennzeichnet, dass** sie ein Verhältnis A im Bereich zwischen 110 und 145 aufweist.

4. Pulverzusammensetzung nach einem der Ansprüche 1 bis 3, **dadurch gekennzeichnet, dass** sie eine mittlere Partikelgröße von 100 bis 400 Mikron aufweist.

5. Pulverzusammensetzung nach einem der Ansprüche 1 bis 4, **dadurch gekennzeichnet, dass** sie aus Kristallagglomeraten besteht.

6. Pulverzusammensetzung nach einem der Ansprüche 1 bis 5, **dadurch gekennzeichnet, dass** sie eine Partikelgrößenverteilung aufweist, die durch Partikelgrößenanalyse unter Verwendung einer RETSCH-Apparatur bestimmt wurde, wie folgt:

- 0 bis 2,3 Gew.-% Partikel > 400 Mikron,
- 34,8 bis 54,9 Gew.-% Partikel im Bereich zwischen 250 und 400 Mikron,
- 42,7 bis 57,9 Gew.-% Partikel im Bereich zwischen 100 und 250 Mikron,
- 1,4 bis 8,0 Gew.-% Partikel im Bereich zwischen 75 und 100 Mikron, und
- 0,5 bis 4,8 Gew.-% Partikel < 75 Mikron, wobei die Summe der verschiedenen Fraktionen 100 Gew.-% entspricht.

7. Pulverzusammensetzung nach einem der Ansprüche 1 bis 6, **dadurch gekennzeichnet, dass** sie eine Partikelgrößenverteilung aufweist, die durch Partikelgrößenanalyse unter Verwendung einer RETSCH-Apparatur bestimmt wurde, wie folgt:

- 0 bis 1 Gew.-% Partikel > 400 Mikron,
- 40 bis 45 Gew.-% Partikel im Bereich zwischen 250 und 400 Mikron,
- 48 bis 53 Gew.-% Partikel im Bereich zwischen 100 und 250 Mikron,
- 3,5 bis 8 Gew.-% Partikel im Bereich zwischen 75 und 100 Mikron, und
- 0,5 bis 2,5 Gew.-% Partikel < 75 Mikron, wobei die Summe der verschiedenen Fraktionen 100 Gew.-% entspricht.

8. Verfahren zum Herstellen einer Pulverzusammensetzung nach einem der Ansprüche 1 bis 7, **dadurch gekennzeichnet, dass** es umfasst:

• einen Schritt zum Umkristallisieren eines Sorbitolsirups, umfassend ein Verhältnis A Sorbitol/(Mannitol + Arabitol) im Bereich zwischen 105 und 150, vorzugsweise zwischen 110 und 145,
• einen Schritt zum Nassgranulieren des erhaltenen Pulvers mithilfe eines Bindemittels, wobei das Bindemittel vorzugsweise ein Sorbitolsirup ist, umfassend ein Verhältnis A Sorbitol/(Mannitol + Arabitol) im Bereich zwischen 105 und 150, vorzugsweise zwischen 110 und 145,
• einen Schritt zum Reifen durch Trocknen der auf diese Weise erhaltenen granulierten Zusammensetzung,
• gegebenenfalls einen Schritt zum Abkühlen der erhaltenen granulierten Zusammensetzung, vorzugsweise auf eine Temperatur unter 10 °C.

9. Herstellungsverfahren nach Anspruch 8, **dadurch gekennzeichnet, dass** der Schritt zum Umkristallisieren und/oder zum Granulieren in einem kontinuierlichen Mischer-Granulator, einem Extruder, einem Sprühtrockner oder mittels Telleragglomeration durchgeführt wird.

10. Herstellungsverfahren nach Anspruch 9, **dadurch gekennzeichnet, dass** der während des Schritts zum Umkristallisieren und/oder zum Granulieren verwendete Sorbitolsirup eine Trockensubstanz im Bereich zwischen 65 und 99,9 %, vorzugsweise zwischen 70 und 99,8 % aufweist.

11. Kaugummi, **dadurch gekennzeichnet, dass** er 2 bis 85 % (Gew./Gew.) einer Pulverzusammensetzung nach einem der Ansprüche 1 bis 7 umfasst.

12. Methode zum Herstellen eines Kaugummis, umfassend die folgenden Schritte:

- Erhalten einer Gummibasis
- Mischen der Gummibasis mit einer Pulverzusammensetzung nach einem der Ansprüche 1 bis 7,
- gegebenenfalls Zugeben eines beliebigen Elements, ausgewählt aus einem Weichmacher, einem Füllstoff, einem Aroma und einer Mischung davon.

**Claims**

1. Pulverulent composition exhibiting:

   • at least 96% of sorbitol (w/w) as dry matter,
   • a ratio A of the sorbitol/(mannitol + arabitol) (w/w) of between 105 and 150, preferably from 110 to 149, and/or a Mechanical Stability Index D(v,0.1) ($MSI_{D(v,0.1)}$) of less than 60%, preferably of less than 55%, the $MSI_{D(v,0.1)}$ being equal to:

   $$MSI_{D(v,0.1)} = \frac{(D(v,0.1)a - D(v,0.1)b) \times 100}{D(v,0.1)a}$$

   in which D(v,0.1)b corresponds to the D(v,0.1) of the said pulverulent composition measured after an impact test comprising three cycles of projecting the said pulverulent composition at 20 m/sec onto a smooth nondeformable surface and D(v,0.1)a corresponding to the D(v,0.1) of the said pulverulent composition measured before the impact test,
   • a bulk density of 630 to 700 g/l,
   • preferably, a specific surface of between 0.6 and 1.8 $m^2$/g.

2. Pulverulent composition according to Claim 1, **characterized in that** it exhibits a packed density of 650 to 730 g/l.

3. Pulverulent composition according to either one of Claims 1 and 2, **characterized in that** it exhibits a ratio A of between 110 and 145.

4. Pulverulent composition according to any one of Claims 1 to 3, **characterized in that** it exhibits a mean particle size of 100 to 400 microns.

5. Pulverulent composition according to any one of Claims 1 to 4, **characterized in that** it is composed of agglomerates of crystals.

6. Pulverulent composition according to any one of Claims 1 to 5, **characterized in that** it exhibits a size distribution of the particles, determined by particle size analysis, using a Retsch appliance, as follows:

   - from 0% to 2.3% by weight, of particles > 400 microns,
   - from 34.8% to 54.9% by weight, of particles of between 250 and 400 microns,
   - from 42.7% to 57.9% by weight, of particles of between 100 and 250 microns,
   - from 1.4% to 8.0% by weight, of particles of between 75 and 100 microns, and
   - from 0.5% to 4.8% by weight, of particles < 75 microns, the sum of the different fractions of which being 100% by weight.

7. Pulverulent composition according to any one of Claims 1 to 6, **characterized in that** it exhibits a size distribution of the particles, determined by particle size analysis, using a Retsch appliance, as follows:

   - from 0% to 1% by weight, of particles > 400 microns,
   - from 40% to 45% by weight, of particles of between 250 and 400 microns,
   - from 48% to 53% by weight, of particles of between 100 and 250 microns,
   - from 3.5% to 8% by weight, of particles of between 75 and 100 microns, and
   - from 0.5% to 2.5% by weight, of particles < 75 microns, the sum of the different fractions of which being 100% by weight.

8. Process for the preparation of a pulverulent composition according to any one of Claims 1 to 7, **characterized in that** it comprises:

   • a stage of crystallization of a sorbitol syrup comprising a sorbitol/(mannitol + arabitol) ratio A of between 105 and 150, preferably between 110 and 145,
   • a stage of wet granulation of the powder obtained using a binder; preferably, the binder is a sorbitol syrup comprising a sorbitol/(mannitol + arabitol) ratio A of between 105 and 150, preferably between 110 and 145,

• a stage of maturing, by drying, the granulated composition thus obtained,
• optionally, a stage of cooling the granulated composition obtained, preferably to a temperature of less than 10°C.

9. Preparation process according to Claim 8, **characterized in that** the crystallization and/or granulation stage is carried out in a continuous mixer-granulator, an extruder or an atomization tower or by pan agglomeration.

10. Preparation process according to Claim 9, **characterized in that** the said sorbitol syrup used during the crystallization and/or granulation stage exhibits a solids content of between 65% and 99.9%, preferably of between 70% and 99.8%.

11. Chewing gum, **characterized in that** it comprises from 2% to 85% (w/w) of a pulverulent composition according to any one of Claims 1 to 7.

12. Method for the production of a chewing gum, comprising the following stages consisting in:

  - obtaining a base gum,
  - mixing the base gum with a pulverulent composition according to one or other of Claims 1 to 7,
  - optionally adding any one of the components chosen from a plasticizing agent, a filler, a flavouring and their mixture.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1008602 A
- GB 1481846 A
- EP 1413567 A
- US 20130225874 A
- US 3973041 A
- WO 8806845 A
- EP 0645096 A
- US 5573777 A

**Littérature non-brevet citée dans la description**

- **LAND.V.** *Industrial crystallization of melts, c. M., Van't Land Processing Enschede the Netherlands,* 2005
- **S. BRUNAUER et al.** BET Surface Area by Nitrogen Absorption. *Journal of Americain Chemical Society,* 1938, vol. 60, 309
- **S. KHASHAYAR ; P. GUIGON.** Mise en OEuvre des Poudres Granulation Humide : bases et théorie. *Techniques de l'Ingénieur Opérations Unitaires : Tri et Traitement des Liquides et des Solides,* 2014, http://www.techniques-ingenieur.fr/base-documentaire/procedes-chimie-bio-agro-th2/operations-unitaires-tri-et-traitement-des-liquides-et-des-solides-42446210/mise-en-uvre-des-poudres-j2253/
- **K. LECHSONSKI ; U. MENZEL.** Experimental Investigations on Single Plate Fluid Energy Milling. *Proceedings of First World Conference on Particles Technology,* 1988, vol. 2, 297-323
- **ROLAND ALBERT et al.** *Chem Ing Tech,* 1980, vol. 52 (7), 582-587
- *Techniques de l'Ingénieur Opérations Unitaires : Tri et Traitement des Liquides et des Solides,* 2014, http://www.techniques-ingenieur.fr/base-documentaire/procedes-chimie-bio-agro-th2/operations-unitaires-tri-et-traitement-des-liquides-et-des-solides-42446210/mise-en-uvre-des-poudres-j2253/
- *Formulation and Production of Chewing and Bubble Gum,* ISBN 0904725103, 81, , 85
- **DOUGLAS FRITZ.** Formulation and production of chewing and bubble gum. Kennedys Books Ltd, 2008